# FASCICULE DE BREVET EUROPEEN

(11) **EP 2 039 513 B1**
(45) Date de publication et mention de la délivrance du brevet: **29.12.2010**
(21) Numéro de dépôt: 08014806.7
(22) Date de dépôt: 21.08.2008
(51) Int. Cl.: B41F 33/00

(54) **Procédé pour déterminer la qualité de surface d'un support et machine de transformation du support associée**
Verfahren zum Bestimmen der Oberflächengüte eines Trägers und zugehörige Maschine zur Transformation des Trägers
Method for determining the surface quality of a support and machine for transforming the associated support

(30) Priorité: 21.09.2007 EP 07018586
(43) Date de publication de la demande: 25.03.2009
(73) Titulaire: BOBST S.A., 1001 Lausanne (CH)
(72) Inventeur: Toma, Claude, 1023 Crissier (CH); Alonso, Jeronimo, 1066 Epalinges (CH)
(74) Mandataire: Poirier, Jean-Michel Serge

(56) Documents cités:
- EP-A- 1 714 786
- DE-A1-102005 026 127
- US-A1- 2007 006 762

## Description

La présente invention concerne un procédé pour déterminer la qualité de surface d'un support. Ce support passe d'un état de support initial à un état de support transformé. L'invention se rapporte également à une machine de transformation d'un support, pour transformer un support initial et obtenir un support transformé. La machine de transformation du support fait partie d'une ligne de production d'emballage.

Dans l'industrie de l'emballage, une ligne de production délivre un produit transformé, réalisé à partir d'un support initial, introduit au départ. Le support peut être un support vierge. Le plus souvent, le support initial vierge peut subir un processus de transformation, par exemple en étant imprimé lors d'un processus d'impression, des opérations de gaufrage, de refoulage et/ou de découpe, afin d'obtenir des poses ou des boîtes qui correspondent à l'emballage sous sa forme mise à plat.

Le support initial sous la forme d'une bobine subissant un processus de transformation peut avoir déjà subi au préalable un ou plusieurs premiers traitements, puis avoir été ensuite reconditionné, par exemple sous la forme d'une nouvelle bobine. Dans ce cas, une fonction d'insetting est nécessaire pour le processus de transformation subséquent.

La machine de transformation comprend un ou plusieurs éléments. Chacun de ces éléments est susceptible d'engendrer différents défauts sur la surface du support transformé, ce qui conduit à des soucis de qualité pour les emballages produits.

Le contrôle de la qualité d'impression se révèle être une opération nécessaire, lorsque le fabricant d'emballages veut pouvoir garantir qu'une production ne va pas être entachée par des défauts. Ces défauts sont jugés selon différents critères d'acceptabilité, mais la sélection des emballages se fait principalement selon un critère de niveau de qualité choisi en fonction du produit devant être emballé.

Le contrôle du support après transformation, avant découpe ou après découpe, avec observation attentive du support transformé, des poses ou des boîtes, se fait encore actuellement de manière visuelle. L'opérateur recherche tous les types de défauts, par exemple ceux liés à l'impression et ajuste les réglages de la machine de transformation en conséquence, de façon à éliminer ou à limiter ces mêmes défauts, de préférence le plus rapidement possible.

Ce contrôle est de plus en plus souvent effectué de manière automatique dans la ligne de production. Les poses ou les boîtes qui ne sont pas conformes aux exigences minimales de qualité d'impression et/ou de découpage et/ou de refoulage et/ou de gaufrage, par rapport à un échantillon estimé à zéro défaut sont éjectées, avant leur empilement dans la station de réception. Le dispositif de détection automatique des défauts se place à la suite du dernier élément de transformation, avant la station d'éjection et avant la station de découpe.

Dans le cas d'une application dite bobine-bobine, c'est-à-dire à partir d'une bobine de support initial vers une autre bobine de support transformé, le support transformé qui n'est pas conformes aux exigences minimales de qualité d'impression et/ou de refoulage et/ou de gaufrage, par rapport à un échantillon estimé à zéro défaut, est repéré et offre la possibilité d'être discriminé.

### Etat de la technique

De nombreux dispositifs de visualisation et/ou de détection de ces défauts existent et utilisent généralement une caméra vidéo ou tout autre organe permettant de capter la lumière réfléchie par le support imprimé.

A titre d'exemple, le document EP- 0.554.811 décrit un dispositif de détection d'erreurs d'impression, et par voie de conséquence de défauts, apparaissant sur un support en bande ou en plaque se déplaçant dans une machine d'impression. Le dispositif comprend une première caméra pour la saisie selon une première résolution d'une image d'une zone échantillon de l'impression sur le support et un dispositif électronique et informatique de numérisation de l'image puis de comparaison avec une image de référence préenregistrée. Une deuxième caméra de saisie globale de l'impression selon une seconde résolution inférieure à la première est associée à la première caméra. Les résultats comparatifs issus de la deuxième caméra sont utilisés dans une boucle de contre-réaction afin de contrôler le fonctionnement de la première caméra.

Cependant, un tel dispositif ne permet pas de repérer tous les types de défauts. En effet, certains défauts vont être progressivement masqués par l'impression de couleurs successives au cours du passage du support dans les groupes imprimeurs successifs. De ce fait, ces défauts ne vont pas être repérés à la surface du support imprimé. Le support imprimé va être classé comme étant acceptable pour constituer un emballage, alors qu'en réalité, un rapide contrôle visuel permet de détecter les imperfections.

On connaît d'après le document US- 5.395.027 un dispositif permettant de surveiller un support continu, précisément un support papier, se déplaçant dans une machine d'impression. Ce dispositif permet de déterminer si le support se déplace correctement, avec une tension correcte, et ne présente ni de déchirures, ni de fissures. De tels défauts au niveau du support provoquent des endommagements de la machine d'impression et de ses accessoires, lors du passage du support au travers de cette machine. Un tel dispositif déclenche un signal d'avertissement, et sert à piloter un agencement pour limiter les endommagements. L'agencement fait sortir de la machine d'impression tout ou partie du support possédant les défauts.

Cependant, un tel dispositif permet uniquement d'éviter des endommagements de la machine d'impression, provoqués par un support possédant des défauts, engendrant des bourrages du support en cours d'impression. Le dispositif n'est pas prévu pour contrôler l'état et la qualité du support en fin de processus d'impression. L'utilisation d'un tel dispositif ne permet que d'éviter des pertes de rendement en limitant les arrêts de la machine d'impression. L'utilisation d'un tel dispositif n'a aucune incidence sur la qualité finale du support imprimé.

Le document US- 2007/ 0006762 décrit un procédé pour contrôler la qualité d'impression. Un produit et au moins un motif sont imprimés simultanément sur une bande continue de papier dans une machine d'impression. Le motif imprimé est séparé du produit imprimé. Les alentours du motif imprimé comprennent du papier non-imprimé. Le procédé consiste à mesurer en continu le motif imprimé après l'impression par au moins un moyen de mesure ; à mesurer le papier non-imprimé en plus du motif imprimé, avec les mêmes moyens de mesure, ou au moins un paramètre de contrôle du fonctionnement de la machine d'impression ; à comparer les résultats de mesure obtenus de la mesure du motif imprimé et du papier non-imprimé ou du paramètre de contrôle du fonctionnement de la machine d'impression ; et à déterminer au moins un facteur influençant la qualité de l'impression basé sur la comparaison.

### Exposé de l'invention

Un problème principal que se propose de résoudre l'invention consiste à mettre au point un procédé pour déterminer la qualité de surface d'un support faisant l'objet d'un processus de transformation. Un deuxième problème est d'améliorer encore d'avantage la qualité du support sortant d'un processus de transformation par détection systématique de ses défauts. Un troisième problème est de prévoir un procédé en plusieurs étapes, au cours desquelles le support, passant d'un état de support initial à un état de support transformé, va subir des contrôles de qualité. Un quatrième problème est de multiplier les étapes de recherche de défauts, afin d'aboutir à un support transformé de qualité optimale, en fonction de ce qui est souhaité par l'utilisateur. Un cinquième problème est celui de mettre en oeuvre un procédé de détermination de la qualité d'un support évitant les problèmes de l'état de la technique. Un autre problème encore est celui de réaliser une machine de transformation, permettant de traiter les informations quant aux défauts détectés.

L'invention concerne donc un procédé pour déterminer la qualité de surface d'un support, passant d'un état initial de support initial à un état transformé de support transformé lors d'un processus de transformation, comprenant les étapes consistant à :
- collecter des premières informations relatives à des défauts de surface détectés sur le support initial, avant le processus de transformation,
- collecter des deuxièmes informations relatives à des défauts de surface détectés sur le support transformé, après le processus de transformation,
- traiter les premières informations et les deuxièmes informations, et à
- effectuer une classification du ce support transformé en fonction des premières informations collectées relatives aux défauts de surface détectés sur ce support initial et en fonction des deuxièmes informations collectées relatives aux défauts de surface détectés sur ce support transformé.

Dans l'ensemble de la description, le support est défini, à titre d'exemple non exhaustif, comme étant :
- sous la forme d'un support en bande continue, par exemple
   de papier, ou
   de carton, ou
   de plastique, tel que du polyéthylène téréphtalate (PET), du polypropylène biorienté (BOPP), ou d'autres polymères, ou
   d'aluminium, ou d'autres matériaux,
- sous la forme d'un support en plaque ou en feuille, par exemple
   du carton plat, ou
   du carton ondulé, ou encore
   un matériau flexible, tel que du polyéthylène (PE), ou d'autres matériaux.

Le support initial est défini comme étant un support vierge brut, issu de la machine de production de ce même support. Ce support vierge est dénué de toute impression, marquage, refoulage, gaufrage, collage, et autres. Ce support vierge pourra être revêtu d'un couchage, par exemple de couleur blanche ou d'autres encore. Ce support vierge peut aussi être un support laminé ou contrecollé.

Le support initial est également défini comme étant un support ayant subit un premier processus de transformation antérieur, tel qu'une première impression, un premier gaufrage, et d'autres encore.

Le support transformé est défini comme étant un support ayant subi un processus de transformation. Le processus de transformation peut être un processus d'impression, au cours duquel une ou plusieurs couleurs ont été appliqués à la surface du support, pour y apposer des signes graphiques et/ou à lui donner un aspect esthétique. Le processus de transformation peut également être un processus de refoulage, de gaufrage, de structuration, d'estampage à chaud (également connu sous la dénomination anglaise de « hot foil stamping »), de collage d'étiquettes ou d'hologrammes, ou d'autres encore. Ce support transformé pourra comprendre une couche de vernis, recouvrant tout ou partie de la surface imprimée.

Les défauts de surface détectés sur le support initial sont définis, à titre d'exemple non exhaustif, comme étant des trous, des déchirures, des taches (huile de machine), des traînées, des poussières, des fibres grossières de bois, des zones d'arrachage du couchage, et d'autres encore.

Les défauts de surface détectés sur le support transformé sont définis, à titre d'exemple non exhaustif, comme étant des traînées de racle, des bavures, des taches, des lignes parasites, des transitions de fond, des variations d'intensité de la ou des couleurs, et d'autres encore.

Ces défauts de surface sont dus à une absence ou à un surplus d'encre, à des trous d'impression, à des clichés se défaisant des cylindres, à des mauvaises mises en registre, lorsque le défaut résulte d'un décalage entre les différentes couleurs de l'impression, voire même à un dérèglement de l'arbre électrique calant plusieurs couleurs les unes par rapport aux autres, à des erreurs de registre entre la ou les couleurs imprimées et le gaufrage ou le hot foil stamping, et d'autres encore.

Autrement dit, en rajoutant une détection avant transformation à une détection après transformation, l'ensemble des informations collectées va permettre d'améliorer le contrôle qualité du produit final. Le procédé permet de dissocier les défauts du matériau présents au niveau du support de départ des défauts de transformation présents en surface du support transformé, de façon à optimiser la gestion des défauts détectés.

En associant deux détections de défauts, les supports transformés obtenus vont être classifiés en différentes catégories. Le fabricant d'emballage choisi ainsi de conserver un support transformé, des poses ou des boîtes avec des défauts, ressortant comme étant uniquement des défauts de support initial, ou des défauts de support transformé, ou les deux.

Grâce à cette solution, la qualité de la production peut être assurée à 100%, évitant ainsi le retour au fabricant d'emballage de séries de poses ou de boîtes entachées de défauts. Grâce à cette solution, la qualité de la production peut être assurée à 100 %, autorisant le retour au fabricant du support initial ayant été détecté comme possédant trop de défauts.

Ce ou ces supports entachés d'erreurs et classés en conséquence, permettent à l'opérateur de prendre une décision immédiate quant au réglage de la machine de transformation. En effet, si le même défaut est détecté au même endroit, à la fois sur le support initial et sur le support transformé, les réglages de la machine de transformation ne sont pas à modifier, les défauts ne pouvant pas être corrigés en raison de leur provenance.

Conformément à un autre aspect de la présente invention, une machine de transformation, pour transformer un support initial et obtenir un support transformé, comprenant :
- au moins un élément de transformation du support initial,
- un premier dispositif pour détecter des défauts de surface sur le support initial et collecter des premières informations relatives aux défauts de surface détectés sur ce support initial, disposé en amont du ou des éléments de transformation,
- un deuxième dispositif pour détecter des défauts de surface sur le support transformé et collecter des deuxièmes informations relatives aux défauts de surface détectés sur ce support transformé, disposé en aval du ou des éléments de transformation, et
- une unité effectuant un traitement des premières informations et des deuxièmes informations et une classification de ce support transformé, en fonction des informations collectées relatives auxdits défauts de surface détectés sur ce support initial et en fonction des informations collectées relatives auxdits défauts de surface détectés sur ce support transformé.

L'élément de transformation est défini, à titre d'exemple non exhaustif, comme étant une machine d'impression, avec au moins un groupe imprimeur, par exemple en héliographie, en flexographie, en offset, ou un groupe de gaufrage, ou un groupe de refoulage, ou un groupe d'estampage à chaud, ou d'autres encore.

Les sens amont et aval sont définis en faisant référence au sens de déplacement du support au cours de la transformation.

En d'autres termes, l'unité de traitement permet à l'opérateur de visualiser les types de défauts détectés, L'unité de traitement pourra également être connectée à une station d'éjection, ce qui permet d'éliminer des poses ou des boîtes selon différents critères, défaut du support initial ou défaut de transformation, au choix du fabricant d'emballage. La machine de transformation est intégrée dans une ligne de production d'emballages.

### Brève description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue latérale en élévation d'une ligne de production d'emballage selon un état de la technique ;
- la Figure 2 représente une vue latérale en élévation d'une machine d'impression selon l'invention ; et
- la Figure 3 représente une vue en plan d'une portion de bande imprimée.

### Exposé détaillé de modes de réalisation préférés

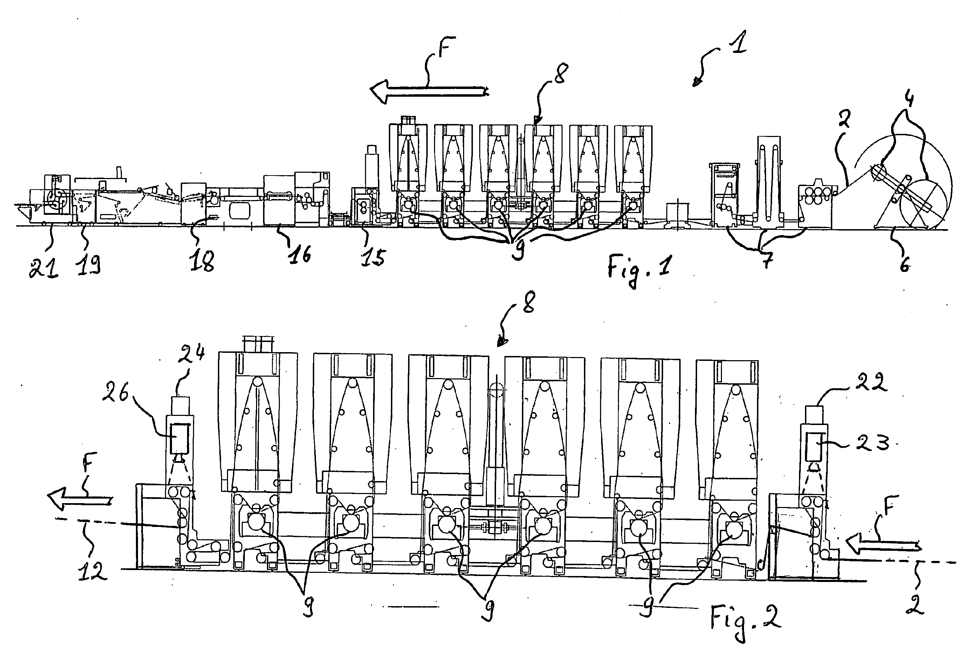

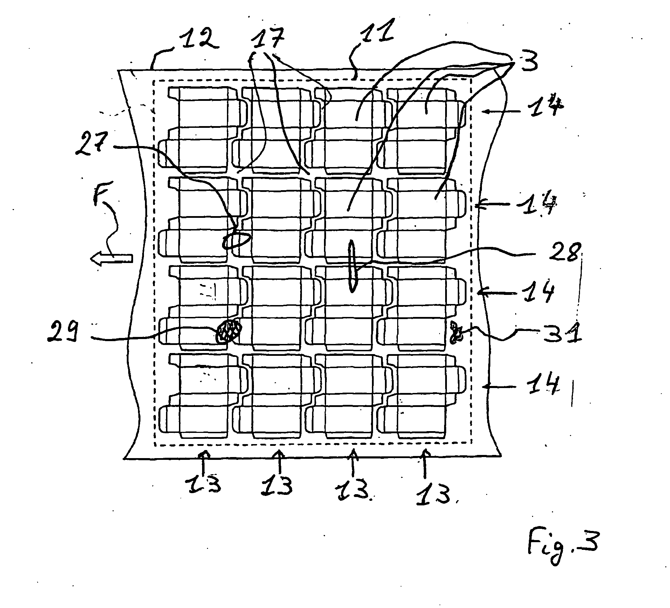

Comme l'illustrent les Figures 1 et 3, la production d'emballages est mises en oeuvre dans une ligne de production d'emballages (1). Cette production démarre à partir d'un support continu initial, c'est-à-dire une bande vierge (2), par exemple du carton, et passe par différentes phases successives, décrites ci-dessous de manière générale. La ligne de production d'emballages (1) est destinée à la fabrication de boîtes (3), qui seront aptes à former des emballages, par pliage et collage.

Dans une première phase, une bobine (4) de cette bande vierge (2) est déroulée à l'aide d'un dérouleur de bande (6) porteur de bobines (4). Une station d'introduction (7) permet ensuite de réguler la tension de la bande vierge (2) et de l'acheminer vers une machine de transformation, décrite ici comme étant une machine d'impression (8). Le sens d'avance (Flèche F en Figures 1 et 3) de la bande vierge (2) donne les sens amont et aval.

Dans une deuxième phase, la bande vierge (2) est imprimée, puis séchée, en passant dans la machine d'impression (8). La bande (2) passe successivement par plusieurs groupes imprimeurs (9), ici au nombre de six, permettant de réaliser une impression.

La bande vierge (2) est imprimée d'une pose (11), représentée en traits pointillés en Figure 3, lors de chaque tour complet des cylindres d'impression des différents groupes imprimeurs (9). Chaque pose (11) présente une ou plusieurs boîtes (3) sous une forme développée. A titre d'exemple, une pose (11) incluant seize boîtes (3) avec leurs futurs traits de pliage et de découpe est montrée en Figure 3. Le support transformé, c'est-à-dire la bande imprimée (12) présente une largeur pouvant contenir plusieurs boîtes (3) généralement identiques. Les poses (3) sont disposées en lignes (13) et rangées (14), en accord avec le sens de déplacement (F) de la bande imprimée (12).

Une station de gaufrage (15) est insérée à la suite de la machine d'impression (8).

Dans une troisième phase, la bande imprimée (12) est amenée dans une station de découpage à plat (16), qui découpe toutes les poses (11) ou les boîtes (3) du reste de la bande imprimée (12). La station de découpage à plat (16) permet de générer ultérieurement des déchets intercalaires (17). Les déchets intercalaires (17) sont retirés dans une station d'éjection des déchets (18).

Dans une quatrième phase, les poses (11) ou les boîtes (3) sont ensuite mises en nappes, avant d'être empilées par rangées pour former des piles dans une station de réception (19). Les piles sont palettisées dans une station de palettisation (21), en vue de leur stockage ou de leur transport hors de la ligne de production (1).

Selon l'invention mis en oeuvre au niveau de la ligne de production d'emballages
(1) et plus particulièrement au niveau de la machine d'impression (8), un procédé a pour but de déterminer la qualité de surface de la bande, passant de son état de bande vierge
(2) à son état de bande imprimée (12). La Figure 2 en donne un exemple de mise en oeuvre.

Dans une première étape de ce procédé selon l'invention, des premières informations relatives à des défauts de surface détectés sur la bande vierge (2) sont collectées. Cette première étape peut comprendre deux sous-étapes supplémentaires. Ces deux sous-étapes peuvent être situées en amont du processus de transformation, ici d'impression. La première de ces deux sous-étapes peut consister à détecter les défauts de surface sur le support initial formé par la bande vierge (2). Et la deuxième de ces deux sous-étapes peut consister à générer des premières informations relatives auxdits défauts de surface sur le support initial formé par cette bande vierge (2).

Dans l'exemple de réalisation préférentiel, la bande vierge (2) entre dans une première station de contrôle de qualité (22), montée dans ou à la sortie de la station d'introduction (7), et avant le premier groupe imprimeur (9) de la machine d'impression (8). La première station de contrôle de qualité (22) a pour but de détecter, de reconnaître, de comptabiliser tous les types de défauts, et ainsi de vérifier que cette bande vierge (2) ne présente pas de défauts.

La première station de contrôle de qualité (22) est notamment dotée d'un premier dispositif qui ausculte la bande vierge (2) et détecte des défauts de surface sur celle-ci. Ce premier dispositif se présente sous la forme d'un système de vision, tel qu'une ou plusieurs caméras haute résolution (23), muni de moyens d'éclairage correspondants. Il est déterminé, par comparaison avec un exemple, mémorisé et défini comme modèle, si la bande vierge (2) est entachée d'un défaut. Si tel est le cas, le dispositif de contrôle de cette première station de contrôle de qualité (22) peut calculer les coordonnées du défaut détecté.

Dans une variante de réalisation de la première étape, les deux sous-étapes supplémentaires, pouvant être situées en amont du processus de transformation, ici d'impression, pouvant consister à détecter les défauts de surface sur le support initial formé par la bande vierge (2), et pouvant consister à générer des premières informations. Les deux sous-étapes peuvent être mises en oeuvre par un fabricant du support initial formé par la bande vierge (2). Les premières informations sont inclues dans un premier fichier. Le fabricant du support initial fournit au fabricant d'emballage la bande vierge (2) en bobine (4), accompagnée du premier fichier contenant les premières informations répertoriant tous les défauts détectés, avec notamment leurs positions et leurs natures.

Chacun des groupes imprimeurs (9) de la machine d'impression (8) est susceptible d'engendrer différents défauts sur la surface de la bande imprimée (12). Dans une deuxième étape de ce procédé selon l'invention, des deuxièmes informations relatives à des défauts de surface détectés sur la bande imprimée (12) sont collectées. Cette deuxième étape peut comprendre deux sous-étapes supplémentaires. Ces deux sous-étapes peuvent être situées en aval du processus de transformation, ici d'impression. La première de ces deux sous-étapes peut consister à pouvoir détecter les défauts de surface sur le support transformé formé par la bande imprimée (12). Et la deuxième de ces deux sous-étapes peut consister à générer des deuxièmes informations relatives auxdits défauts de surface sur le support transformé formé par cette bande imprimée (12).

Dans l'exemple de réalisation préférentiel, la bande imprimée (12) entre dans une deuxième station de contrôle de qualité (24) montée à la sortie du dernier groupe imprimeur (9) de la machine d'impression (8), et avant la station de découpage (16). La deuxième station de contrôle de qualité (24) a pour but de détecter, de reconnaître, de comptabiliser tous les types de défauts, et ainsi de vérifier que cette bande imprimée (12) ne présente pas de défauts.

La deuxième station de contrôle de qualité (24) est notamment dotée d'un deuxième dispositif qui ausculte toute la surface du format d'impression (11) de la bande imprimée (12) et détecte des défauts de surface sur celle-ci. Ce deuxième dispositif se présente sous la forme d'un système de vision, tel qu'une ou plusieurs caméras haute résolution (26), muni de moyens d'éclairage correspondants. Il est déterminé, par comparaison avec un format mémorisé défini comme modèle, si la portion de bande imprimée (12) est entachée d'un défaut. Si tel est le cas, le dispositif de contrôle de cette deuxième station de contrôle de qualité (24) peut calculer dans quelle lignée (13) et dans quelle rangée (14) du format d'impression (11) le défaut a été détecté.

Dans une autre variante de réalisation de la deuxième étape, les deux sous-étapes supplémentaires, pouvant être situées en aval du processus de transformation, ici d'impression, pouvant consister à détecter les défauts de surface sur le support transformé formé par la bande imprimée (12), et pouvant consister à générer des deuxièmes informations. Les deux sous-étapes peuvent être mises en oeuvre par un utilisateur du support transformé formé par la bande imprimée (12). Les deuxièmes informations sont inclues dans un deuxième fichier. L'utilisateur du support transformé reçoit du fabricant d'emballage le support transformé formé par la bande imprimée (12) en bobine, accompagnée du deuxième fichier contenant les deuxièmes informations répertoriant tous les défauts détectés, avec notamment leurs positions et leurs natures.

Dans une troisième étape de ce procédé selon l'invention, les premières et deuxièmes informations sont traitées et comparées entre-elles au moyen d'une unité informatique spécifique (non représentée). Les défauts sont repérés et mémorisés par l'unité qui enregistre leur position par rapport à une origine, dans le sens longitudinal, et par rapport aux différentes rangées (14) qu'ils occupent, dans le sens transversal.

Dans une quatrième étape de ce procédé selon l'invention, une classification de cette bande imprimée (12) est effectuée en fonction des premières informations collectées relatives aux défauts de surface détectés sur cette bande vierge (2) et en fonction des deuxièmes informations collectées relatives aux défauts de surface détectés sur cette bande imprimée (12).

Le procédé pour déterminer la qualité de surface du support est également un procédé de gestion et un outil d'aide à la décision. Il permet notamment de situer, par exemple sous une forme schématique, tabulaire, de fichier numérique ou d'image l'ensemble du support tel que la bande imprimée (12), entachée de tous ses défauts préalablement détectés.

Grâce au procédé, on visualise plusieurs cas de figures représentatifs du niveau de qualité de la bande vierge et imprimée (2 et 12). Toutes les portions de bande vierge et imprimée (2 et 12) recouvertes de défauts trop marqués, qu'il conviendrait d'éliminer, sont dénombrées et repérées dans chaque cas. Le procédé est mis en oeuvre avant même d'entreprendre une action irrémédiable de découpe, d'éjection ou de conditionnement des poses (3).

Le procédé peut préférentiellement comprendre une étape supplémentaire, située en aval de l'étape consistant à effectuer une classification de ce support imprimé. Cette étape peut consister à effectuer un marquage de tout ou partie du support transformé formé par la bande imprimée (12), de façon à repérer les défauts de surface détectés sur le support initial formé par la bande vierge (2) et/ou les défauts de surface détectés sur le support transformé formé par la bande imprimée (12).

De manière favorable, le procédé peut comprendre une étape supplémentaire, située en aval de la quatrième étape consistant à effectuer une classification de ce support transformé formé par la bande imprimée (12).

Le procédé permet de distinguer et de classer des défauts (27) collectés ou détectés par la première station de contrôle de qualité (22), mais non collectés ou non détectés par la deuxième station de contrôle de qualité (24). Si l'impression est acceptable, la machine d'impression (8) continue sa production qui va être acheminée vers la station suivante de découpage (16). Dans ce cas, les défauts (27) présents sur la bande vierge (2) ont été masqués par une forte densité de couleur, au cours du processus de transformation, c'est-à-dire d'impression.

Ces défauts (27) sont jugés acceptables par certains fabricants d'emballages selon le type de produit emballé. Selon leur nature, ces défauts (27) peuvent être éliminés par dépoussiérage de la bande vierge (2). Selon leur densité, ces défauts (27) peuvent également conduire au renvoi de la bobine (4) chez le fabricant de bande vierge (2).

Le procédé permet de distinguer et de classer des défauts (28) collectés ou détectés par la deuxième station de contrôle de qualité (24), mais non collectés ou non détectés par la première station de contrôle de qualité (22). Ce sont des défauts (28) qui résultent généralement d'une usure ou d'une dérive d'un des organes de la rotative et qui ne peuvent que s'accroître au fil de l'impression.

Si l'impression n'est pas acceptable, l'opérateur de la machine d'impression (8) en sera informé et apportera à la commande de la machine d'impression (8) les modifications nécessaires à la correction du défaut (28). Si nécessaire, l'opérateur de la machine d'impression (8) sera même contraint de stopper l'impression pour remédier à la cause éventuelle du défaut (28) avant que celui-ci ne devienne plus tolérable. Ces défauts (28) restent encore temporairement, au début, dans la limite de tolérance mais sont l'avertissement d'une détérioration en cours. Ces défauts (28) sont fréquemment dus à une usure progressive de plusieurs pièces de la machine d'impression (8) tel que, traditionnellement, le racleur d'encre, la forme d'impression, le rouleau presseur, etc. De tels défauts (28) peuvent également provenir du dépôt momentané de poussières qui pourraient être facilement éliminées.

Le procédé permet de distinguer et de classer des défauts (29) collectés ou détectés par la première station de contrôle de qualité (22) et par la deuxième station de contrôle de qualité (24). Ces défauts fugitifs et trop importants exigent que la bande imprimée (12), les poses (11) ou les boîtes (3) soient retirées par la suite de la chaîne (1) pour rebuts.

Le constat de ces défauts (29) donne lieu à l'intervention de l'opérateur de la machine d'impression (8) ou par le biais d'une étiqueteuse automatique, qui marquera l'endroit approximatif où le défaut (29) a été détecté. Ce marquage par la pose d'un papillon (languette de carton) sur la bande imprimée (12) de façon à ce que le papillon dépasse légèrement de son bord et soit facilement repérable, si la bande imprimée (12) est rembobinée (12).

Cette étape de classification avec le constat de ces défauts (29) conduit également au pilotage d'une station d'éjection (non représentée) de toute ou partie de la bande imprimée (12), des poses (11) ou des boîtes (3) avec défauts correspondantes.

Dans une version complète, les premières informations relatives à des défauts de surface détectés sur le support initial formé par la bande vierge (2) et les deuxièmes informations relatives à des défauts de surface détectés sur le support transformé formé par la bande imprimée (12) peuvent avantageusement être collectées côté recto et côté verso du support initial formé par cette bande vierge (2), puis de cette bande imprimée (12).

Il est à noter que, si la résolution de suivi des défauts le permet, les premières informations relatives à des défauts de surface (31) détectés sur le support initial ou sur la bande vierge (2) et les deuxièmes informations relatives à des défauts de surface détectés sur le support transformé ou sur la bande imprimée (12), correspondants à des défauts situés dans des zones de déchets (17) après découpe, pourront être discriminées.

De nombreuses modifications peuvent être réalisées, sans pour autant sortir du cadre défini par la portée du jeu de revendications.

La ligne de production (1) présentée utilise une bande initiale (2) en bobine (4) et une station de découpage (16). Toutefois, la ligne de production (1) pourra utiliser un support initial sous la forme d'une bande initiale (2) en bobine (4), puis une station de rembobinage du support transformé, c'est-à-dire de la bande imprimée (12), située en fin de ligne, sans la présence d'une station de découpage ou d'éjection des poses ou des boîtes jugées non conformes.

La présente invention se rapporte également à une ligne de production utilisant comme support d'impression des feuilles de grand format, plutôt qu'une bande, et utilisant une platine de découpage à plat, plutôt qu'un organe de découpage rotatif.

## Revendications

1. Procédé pour déterminer la qualité de surface d'un support, passant d'un état initial de support initial (2) à un état transformé de support transformé (12) lors d'un processus de transformation, comprenant l'étape consistant à :
- collecter des deuxièmes informations relatives à des défauts de surface (28, 29) détectés sur le support transformé (12), après le processus de transformation,
**caractérisé en ce qu'**il comprend les étapes consistant à :
- collecter des premières informations relatives à des défauts de surface (27, 29) détectés sur le support initial (2), avant le processus de transformation,
- traiter les premières informations et les deuxièmes informations, et à
- effectuer une classification dudit support transformé (12) en fonction des premières informations collectées relatives aux défauts de surface (27, 29) détectés sur ledit support initial (2) et en fonction des deuxièmes informations collectées relatives aux défauts de surface (28, 29) détectés sur ledit support transformé (12).

2. Procédé selon la revendication 1, **caractérisé en ce qu'**il comprend deux étapes supplémentaires, situées en aval du processus de transformation, consistant à détecter les défauts de surface (28, 29) sur le support transformé (12), et à générer des deuxièmes informations relatives auxdits défauts de surface (28, 29) sur ledit support transformé (12).

3. Procédé selon la revendication 2, **caractérisé en ce que** les deux étapes supplémentaires, situées en aval du processus de transformation, consistant à détecter les défauts de surface (28, 29) sur le support transformé (12), et à générer des deuxièmes informations, sont mises en oeuvre par un utilisateur du support transformé (12).

4. Procédé selon l'une quelconque des revendications précédentes, **caractérisé en ce qu'**il comprend deux étapes supplémentaires, situées en amont du processus de transformation, consistant à détecter les défauts de surface (27, 29) sur le support initial (2), et à générer des premières informations relatives auxdits défauts de surface (27, 29) sur ledit support initial (2).

5. Procédé selon la revendication 4, **caractérisé en ce que** les deux étapes supplémentaires, situées en amont du processus de transformation, consistant à détecter les défauts de surface (27, 29) sur le support initial (2), et à générer des premières informations, sont mises en oeuvre par un fabricant du support initial (2).

6. Procédé selon l'une quelconque des revendications précédentes, **caractérisé en ce qu'**il comprend une étape supplémentaire, située en aval de l'étape consistant à effectuer une classification dudit support transformé (12), consistant à effectuer un marquage de tout ou partie du support transformé (12), de façon à repérer les défauts de surface (27, 29) détectés sur le support initial (2) et/ou les défauts de surface (28, 29) détectés sur le support transformé (12).

7. Procédé selon l'une quelconque des revendications précédentes, **caractérisé en ce qu'**il comprend une étape supplémentaire, située en aval de l'étape consistant à effectuer une classification dudit support transformé (12), consistant à éjecter tout ou partie du support transformé (12).

8. Procédé selon l'une quelconque des revendications 2 à 7, **caractérisé en ce que** les premières informatisons relatives à des défauts de surface (27, 29) détectés sur le support initial (2) et les deuxièmes informations relatives à des défauts de surface (28, 29) détectés sur le support transformé (12) sont collectées côté rccto et côté verso dudit support initial (2) et dudit support transformé (12).

9. Machine de transformation, pour transformer un support initial (2) et obtenir un support transformé (12), comprenant :
- au moins un élément de transformation (9) du support initial (2),
- un deuxième dispositif (24) pour détecter des défauts de surface (28, 29) sur le support transformé (12) et collecter des deuxièmes informations relatives aux défauts de surface (28, 29) détectés sur ledit support transformé (12), disposé en aval du ou des éléments de transformation (9),
**caractérisé en ce qu'**il comprend :
- un premier dispositif (22) pour détecter des défauts de surface (27, 29) sur ledit support initial (2) et collecter des premières informations relatives aux défauts de surface (27, 29) détectés sur ledit support initial (2), disposé en amont du ou des éléments de transformation (9), et
- une unité effectuant un traitement des premières informations et des deuxièmes informations et une classification dudit support transformé (12), en fonction des informations collectées relatives auxdits défauts de surface (27, 29) détectés sur ledit support initial (2) et en fonction des informations collectées relatives auxdits défauts de surface (28, 29) détectés sur ledit support transformé (12).

10. Machine selon la revendication 9, **caractérisée en ce que** le premier dispositif (22) pour détecter des défauts de surface (27, 29) sur le support initial (2) et le deuxième dispositif (24) pour détecter des défauts de surface (28, 29) sur le support transformé (12) se présentent sous la forme d'un système de vision (23, 26), muni de moyens d'éclairage du support (2, 12) correspondants.

## Claims

1. Method for determining the surface quality of a substrate passing from an initial state (2) into a converted state (12) during a conversion process, comprising the steps consisting of:
- acquiring second information relating to surface defects (28, 29) detected on the converted substrate (12), after the conversion process,
**characterized in that** it comprises the steps consisting of:
- acquiring first information relating to surface defects (27, 29) detected on the initial substrate (2), before the conversion process,
- processing the first information and the second information, and
- classifying said converted substrate (12) as a function of the first acquired information relating to the surface defects (27, 29) detected on said initial substrate (2) and as a function of the second acquired information relating to the surface defects (28, 29) detected on said converted substrate (12).

2. Method according to claim 1, **characterized in that** it comprises two additional steps, downstream the conversion process, consisting of detecting the surface defects (28, 29) on the converted substrate (12) and of creating second information relating to said surface defects (28, 29) on said converted substrate (12).

3. Method according to claim 2, **characterized in that** the two additional steps downstream the conversion process, consisting of detecting the surface defects (28, 29) on the converted substrate (12) and of generating second information, are implemented by a user of the converted substrate (12).

4. Method according to any one of the preceding claims, **characterized in that** it comprises two additional steps, upstream the conversion process, consisting of detecting the surface defects (27, 29) on the initial substrate (2) and of creating first information relating to said surface defects (27, 29) on said initial substrate (2).

5. Method according to claim 4, **characterized in that** the two additional steps upstream the conversion process, consisting of detecting the surface defects (27, 29) on the initial substrate (2) and of generating first information, are implemented by a manufacturer of the initial substrate (2).

6. Method according to any one of the preceding claims, **characterized in that** it comprises an additional step, downstream the step consisting of classifying said converted substrate (12), consisting of marking all or part of the converted substrate (12) so as to identify the surface defects (27, 29) detected on the initial substrate (2) and/or the surface defects (28,29) detected on the converted substrate (12).

7. Method according to any one of the preceding claims, **characterized in that** it comprises an additional step, downstream the step consisting of classifying said converted substrate (12), consisting of ejecting all or part of the converted substrate (12).

8. Method according to any one of claims 2 to 7, **characterized in that** the first information relating to surface defects (27, 29) detected on the initial substrate (2) and the second information relating to surface defects (28, 29) detected on the converted substrate (12) are acquired from the front and reverse sides of said initial substrate (2) and of said converted substrate (12).

9. Converting machine for converting an initial substrate (2) and obtaining a converted substrate (12), comprising:
- at least one element (9) for converting the initial substrate (2),
- a second device (24) for detecting surface defects (28, 29) on the converted substrate (12) and acquiring second information relating to the surface defects (28, 29) detected on said converted substrate (12), said device being placed downstream of the converting element or elements (9), and
**characterized in that** it comprises:
- a first device (22) for detecting surface defects (27, 29) on said initial substrate (2) and acquiring first information relating to the surface defects (27, 29) detected on said initial substrate (2), said device being placed upstream of the converting element or elements (9),
- an unit processing the first information and the second information and classifying said converted substrate (12) as a function of the acquired information relating to said surface defects (27, 29) detected on said initial substrate (2) and as a function of the acquired information relating to said surface defects (28, 29) detected on said converted substrate (12).

10. Machine according to claim 9, **characterized in that** the first device (22) for detecting surface defects (27, 29) on the initial substrate (2) and the second device (24) for detecting surface defects (28, 29) on the converted substrate (12) are in the form of a viewing system (23, 26) provided with corresponding means for illuminating the substrate (2, 12).

## Patentansprüche

1. Verfahren zum Bestimmen der Oberflächengüte eines Trägers, der von einem Ausgangszustand als Ausgangsträger (2) auf einen bearbeiteten Zustand als bearbeiteter Träger (12) in einem Bearbeitungsprozess übergeht, umfassend folgenden Schritt:
- Sammeln zweiter Informationen über Oberflächendefekte (28, 29), die auf dem bearbeiteten Träger (12) erfasst werden, nach dem Bearbeitungsprozess,
**dadurch gekennzeichnet, dass** es folgende Schritte umfasst:
- Sammeln erster Informationen über Oberflächendefekte (27, 29), die auf dem Ausgangsträger (2) erfasst werden, vor dem Bearbeitungsprozess,
- Verarbeiten der ersten Informationen und der zweiten Informationen, und
- Ausführen einer Klassifizierung des bearbeiteten Trägers (12) in Abhängigkeit von den ersten gesammelten Informationen über die Oberflächendefekte (27, 29), die auf dem Ausgangsträger (2) erfasst wurden, und in Abhängigkeit von den zweiten gesammelten Informationen über die Oberflächendefekte (28, 29), die auf dem bearbeiteten Träger (12) erfasst wurden.

2. Verfahren nach Anspruch 1, **dadurch gekennzeichnet, dass** es zwei weitere, dem Bearbeitungsprozess nachgeschaltete Schritte umfasst, die darin bestehen, die Oberflächendefekte (28, 29) auf dem bearbeiteten Träger (12) zu erfassen und zweite Informationen über die Oberflächendefekte (28, 29) auf dem bearbeiteten Träger (12) zu erzeugen.

3. Verfahren nach Anspruch 2, **dadurch gekennzeichnet, dass** die beiden weiteren, dem Bearbeitungsprozess nachgeschalteten Schritte, die darin bestehen, die Oberflächendefekte (28, 29) auf dem bearbeiteten Träger (12) zu erfassen und zweite Informationen zu erzeugen, von einem Benutzer des bearbeiteten Trägers (12) durchgeführt werden.

4. Verfahren nach einem der vorhergehenden Schritte, **dadurch gekennzeichnet, dass** es zwei weitere, dem Bearbeitungsprozess vorgeschaltete Schritte umfasst, die darin bestehen, die Oberflächendefekte (27, 29) auf dem Ausgangsträger (2) zu erfassen und erste Informationen über die Oberflächendefekte (27, 29) auf dem Ausgangsträger (2) zu erzeugen.

5. Verfahren nach Anspruch 4, **dadurch gekennzeichnet, dass** die beiden weiteren, dem Bearbeitungsprozess vorgeschalteten Schritte, die darin bestehen, die Oberflächendefekte (28, 29) auf dem Ausgangsträger (2) zu erfassen und erste Informationen zu erzeugen, von einem Hersteller des Ausgangsträgers (2) durchgeführt werden.

6. Verfahren nach einem der vorhergehenden Ansprüche, **dadurch gekennzeichnet, dass** es einen weiteren Schritt umfasst, der dem Schritt nachgeschaltet ist, der darin besteht, eine Klassifizierung des bearbeiteten Trägers (12) vorzunehmen, der darin besteht, eine Markierung des ganzen oder eines Teils des bearbeiteten Trägers (12) vorzunehmen, um die Oberflächendefekte (27, 29), die auf dem Ausgangsträger (2) erfasst wurden, und/oder die Oberflächendefekte (28, 29), die auf dem bearbeiteten Träger (12) erfasst wurden, zu markieren.

7. Verfahren nach einem der vorhergehenden Ansprüche, **dadurch gekennzeichnet, dass** es einen weiteren Schritt umfasst, der dem Schritt nachgeschaltet ist, der darin besteht, eine Klassifizierung des bearbeiteten Trägers (12) vorzunehmen, der darin besteht, den ganzen oder einen Teil des bearbeiteten Trägers (12) auszustoßen.

8. Verfahren nach einem der Ansprüche 2 bis 7, **dadurch gekennzeichnet, dass** die ersten Informationen über Oberflächendefekte (27, 29), die auf dem Ausgangsträger (2) erfasst wurden, und die zweiten Informationen über Oberflächendefekte (28, 29), die auf dem bearbeiteten Träger (12) erfasst wurden, auf der Vorderseite und auf der Rückseite des Ausgangsträgers (2) und des bearbeiteten Trägers (12) gesammelt werden.

9. Bearbeitungsmaschine, zum Bearbeiten eines Ausgangsträgers (2) und zum Erzielen eines bearbeiteten Trägers (12), umfassend:
- mindestens ein Element (9) zum Bearbeiten des Ausgangsträgers (2),
- eine zweite Vorrichtung (24) zum Erfassen der Oberflächendefekte (28, 29) auf dem bearbeiteten Träger (12) und zum Sammeln der zweiten Informationen über die Oberflächendefekte (28, 29), die auf dem bearbeiteten Träger (12) erfasst wurden, die unterhalb des oder der Bearbeitungselemente (9) angeordnet ist;
**dadurch gekennzeichnet, dass** sie Folgendes umfasst:
- eine erste Vorrichtung (22) zum Erfassen von Oberflächendefekten (27, 29) auf dem Ausgangsträger (2) und zum Sammeln erster Informationen über die Oberflächendefekte (27, 29), die auf dem Ausgangsträger (2) erfasst wurden, die oberhalb des oder der Bearbeitungselemente (9) angeordnet ist, und
- eine Einheit, die eine Verarbeitung der ersten Informationen und der zweiten Informationen und eine Klassifizierung des bearbeiteten Trägers (12) in Abhängigkeit von den gesammelten Informationen über die Oberflächendefekte (27, 29), die auf dem Ausgangsträger (2) erfasst wurden, und in Abhängigkeit von den gesammelten Informationen über die Oberflächendefekte (28, 29), die auf dem bearbeiteten Träger (12) erfasst wurden, vornimmt.

10. Maschine nach Anspruch 9, **dadurch gekennzeichnet, dass** die erste Vorrichtung zum Erfassen der Oberflächendefekte (27, 29) auf dem Ausgangsträger (2) und die zweite Vorrichtung (24) zum Erfassen der Oberflächendefekte (28, 29) auf dem bearbeiteten Träger (12) als Visionssystem (23, 26) vorliegen, das mit entsprechenden Mitteln zum Beleuchten des Trägers (2, 12) ausgestattet ist.
